(19) **Europäisches Patentamt**
European Patent Office
Office européen des brevets

(11) **EP 2 087 582 B1**

(12) **EUROPÄISCHE PATENTSCHRIFT**

(45) Veröffentlichungstag und Bekanntmachung des Hinweises auf die Patenterteilung:
**09.02.2011 Patentblatt 2011/06**

(21) Anmeldenummer: **07821386.5**

(22) Anmeldetag: **16.10.2007**

(51) Int Cl.:
**H02P 1/18** *(2006.01)* **H02P 6/20** *(2006.01)*

(86) Internationale Anmeldenummer:
**PCT/EP2007/061020**

(87) Internationale Veröffentlichungsnummer:
**WO 2008/064956 (05.06.2008 Gazette 2008/23)**

(54) **PULSWEITENMODULATIONS-ANSTEUERUNG EINER ELEKTROHANDWERKZEUGMASCHINE**

PULSE-WIDTH-MODULATION DRIVING OF A MANUALLY OPERATED ELECTRIC MACHINE TOOL

COMMANDE PAR MODULATION DE LARGEUR DES IMPULSIONS POUR OUTIL MANUEL ÉLECTRIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **01.12.2006 DE 102006056833**

(43) Veröffentlichungstag der Anmeldung:
**12.08.2009 Patentblatt 2009/33**

(73) Patentinhaber: **Robert Bosch GmbH
70442 Stuttgart (DE)**

(72) Erfinder:
• **VANDAMME, Antoine
70839 Gerlingen (DE)**
• **BAUR, Hans-Joachim
70771 Leinfelden-Echterdingen (DE)**
• **BERTSCH, Christian
71706 Markgroeningen (DE)**

(56) Entgegenhaltungen:
**EP-A- 0 808 018 EP-A- 1 594 209
WO-A-2005/038952 US-A1- 2004 179 829**

EP 2 087 582 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine Pulsweitenmodulations-Ansteuerung einer Elektrohandwerkzeugmaschine mit Akkustromversorgung.

## Stand der Technik

Bei bekannten Pulsweitenmodulations-Ansteuerungen von Elektrohandwerkzeugmaschinen mit Akkustromversorgung wird der Drückerweg eines von einer Bedienperson betätigten Drückers mittels eines Potentiometers in einen entsprechenden Widerstandswert umgesetzt. Der erfasste Widerstand wird linear in ein Pulsweitenmodulations-Tastverhältnis einer Pulsweitenmodulations-Schaltung zum Betreiben eines Elektromotors der Elektrohandwerkzeugmaschine umgerechnet. Das dem Drücker zugeordnete Potentiometer arbeitet hinsichtlich seines Widerstandswertes proportional zum Drückerweg. Alternativ ist es zur Erzielung eines bestimmten Verhaltens auch bekannt, eine bestimmte Kennlinie des ohmschen Widerstands in Abhängigkeit vom Drückerweg vorzusehen. Diese Beziehung ist dann jedoch fix, das heißt sie kann nicht verändert werden. Ferner ist es bei Pulsweitenmodulations-Ansteuerungen bekannt, den ohmschen Lastwiderstand der Elektrohandwerkzeugmaschine, also den ohmschen Lastwiderstand des zum Antreiben eines Werkzeugs dienenden Elektromotors, und dem Innenwiderstand der Akkustromversorgung, also der (wiederaufladbaren) Batterie (vorzugsweise einschließlich vorhandener Leitungswiderstände) so aufeinander abzustimmen, dass diese Widerstände etwa gleich groß sind. Insbesondere wird die Spannung, die am Innenwiderstand der Batterie abfällt, so gewählt, dass sie gleich groß oder etwa gleich groß ist wie die Spannung an der Last, die sich insbesondere aus der Spannung, die am ohmschen Motorwiderstand abfällt und der induzierten Spannung des Elektromotors zusammensetzt. Zum Schutz der Batterie (des Akkus) ist bekannt, eine zulässige Stromstärke nicht zu überschreiten, da zu große Ströme die Batterie schädigen können. Der zulässige Strom hängt überdies von der Zeitdauer ab, während der er auftritt. Beispielsweise kann ein Akku eine Sekunde lang 50 A aushalten, 5 Sekunden lang jedoch nur 20 A. Der Motorstrom ist durch den jeweils vorliegenden Lastfall vorgegeben.

Die US 2004/0179829 A1 offenbart die Ansteuerung eines Elektrowerkzeugs mittels Pulsweitenmodulation (PWM). Es ist ein Mikroprozessor zur Ansteuerung eines Elektromotors mittels eines vorgebbaren PWM-Tastverhältnisses vorgesehen. Der Mikroprozessor erhält als Eingangsdaten von einem Analog-Digital-Wandler die digitalisierten Daten eines Potentiometers, das zur Einstellung der Geschwindigkeit des Elektromotors mittels eines extern an dem Elektrowerkzeug angebrachten Drehschalters einstellbar ist. Mittels des Drehschalters kann demnach die Sollgeschwindigkeit des Elektrowerkzeugs eingestellt werden, wobei der Mikroprozessor das PWM-Tastverhältnis in Abhängigkeit von einem weiteren Parameter - nämlich dem mittels einer Strommess-Vorrichtung gemessenen und mittels eines weiteren A/D-Wandlers digitalisierten Motorstroms - bestimmt.

Bei einer pulsweitenmodulierten (PWM) Ansteuerung des Elektromotors in Verbindung mit einem Zwischenkreiskondensator kann erreicht werden, dass der für den jeweiligen Lastfall notwendige Motorstrom aufgebracht wird, wobei jedoch der zulässige Batteriestrom eine vorgegebene Grenze nicht überschreitet. Wenn mit $\alpha$ das Tastverhältnis der Pulsweitenmodulation bezeichnet wird, ist der Akkustrom um den Faktor $\alpha$ kleiner als der Motorstrom des Elektromotors. Um eine Schädigung des Akkus zu vermeiden, wird beispielsweise der zulässige Motorstrom nach einer Sekunde von 50 A auf 20 A gesenkt und es wird das Tastverhältnis entsprechend angepasst. Hierbei sinkt dann natürlich die Drehzahl beziehungsweise das Motormoment. Bei den bekannten Elektrohandwerkzeugmaschinen, die wie vorstehend beschrieben ausgebildet sind, kann insbesondere bei hochohmigen Batterien der Fall auftreten, dass das maximale Moment beziehungsweise die maximale Drehzahl nicht bei voll durchgedrücktem Drücker erreicht wird, sondern bereits in einer Zwischenstellung des Drückerwegs. Dieses Verhalten entspricht nicht den Erwartungen des Anwenders.

## Offenbarung der Erfindung

Bei der erfindungsgemäßen Pulsweitenmodulations-Ansteuerung der Elektrohandwerkzeugmaschine mit Akkustromversorgung ist ein von einer Bedienperson betätigbarer Drücker vorgesehen, dessen Drückerweg von einer Pulsweitenmodulations-Schaltung in ein Pulsweitenmodulations-Tastverhältnis zur Ansteuerung eines Elektromotors zum Antreiben der Elektrohandwerkzeugmaschine umgesetzt wird, wobei die Pulsweitenmodulations-Schaltung den Drückerweg unter Berücksichtigung mindestens eines weiteren Parameters in das Pulsweitenmodulations-Tastverhältnis umsetzt. Erfindungsgemäß ist vorgesehen, dass der mindestens eine Parameter derart berücksichtigt wird, dass ein linearer Anstieg des Drehmoments des Elektromotors mit dem Drückerweg im Falle des blockierten Elektromotors erfolgt und/oder dass ein linearer Anstieg der Drehzahl des Elektromotors mit dem Drückerweg im Falle des drehenden Elektromotors oberhalb seines Loslaufpunktes erfolgt. Unter einem "blockierten Elektromotor" ist zu verstehen, dass sich der Elektromotor nicht beziehungsweise sehr langsam dreht, dass also beispielsweise eine Spindel der Elektrohandwerkzeugmaschine nicht in Drehung versetzt wird, beispielsweise wenn aufgrund einer Werkstückbearbeitung ein entsprechendes Gegenmoment vorliegt. Unter "drehenden Elektromotor oberhalb seines Loslaufpunktes" ist zu verstehen, dass sich der Elektromotor dreht, wobei der Drücker derart weit niedergedrückt ist, dass diese Drehung herbeigeführt wird, also der Loslaufpunkt überwunden ist. Beim Niederdrücken bis zum Erreichen des Loslaufpunktes erfolgt noch keine Drehung des Elektromotors. Aufgrund dieses erfindungsgemäßen Vorgehens lässt sich ein Verhalten realisieren, das der Erwartung des Anwenders entspricht, das heißt, in Abhängigkeit des von der Bedienperson betätigten Drückers, also in Abhängigkeit von dem jeweils aktuell eingestellten Drückerweg, reagiert der Elektromotor des Elektrohandwerkzeugs entsprechend erwartungsgemäß, sodass insbesondere mit größerem Drückerweg auch das Drehmoment und/ oder die Drehzahl des Elektromotors ansteigt.

Nach einer Weiterbildung der Erfindung ist vorgesehen, dass der Parameter der jeweils aktuelle Motorstrom des Elektromotors ist. Wird bei der Zuordnung von Drückerweg und Pulsweitenmodulations-Tastverhältnis als Parameter der aktuelle, also von der jeweiligen Drückerposition abhängige Motorstrom berücksichtigt, so liegt keine fixe Beziehung zwischen dem Drückerweg und der Pulsweitenmodulation vor, sondern ein sich jeweils anpassendes Verhältnis.

Ferner ist es vorteilhaft, wenn der Drücker ein Potentiometer aufweist, dessen Widerstandswert dem jeweiligen Drückerweg entspricht. Der Widerstandswert verändert sich demgemäß in Abhängigkeit vom Drückerweg, wird jedoch nicht direkt für die Erzeugung des Pulsweitenmodulations-Tastverhältnis verwendet, sondern unter Berücksichtigung des weiteren Parameters, insbesondere des jeweils aktuellen Motorstroms, verarbeitet.

Nach einer Weiterbildung der Erfindung ist vorgesehen, dass die Pulsweitenmodulations-Schaltung mindestens einen Mikroprozessor zur Berücksichtigung des mindestens einen Parameters aufweist. Demzufolge weist die Elektrohandwerkzeugmaschine einen Mikroprozessor auf, der unter Berücksichtigung des Drückerwegs und des mindestens einen Parameters die Pulsweitenmodulations-Ansteuerung vornimmt.

Nach einer Weiterbildung der Erfindung ist vorgesehen, dass im Mikroprozessor ein vereinfachtes elektrisches Systemmodell der Elektrohandwerkzeugmaschine, insbesondere einschließlich der Stromversorgung, hinterlegt ist. Demzufolge wird das Systemmodell in Form von elektrischen Gleichungen im Mikroprozessor hinterlegt, um die Beziehung zwischen Drückerweg und Tastverhältnis PWM vorteilhaft auszugestalten. Die Realisierung erfolgt vorzugsweise rein durch Software.

Ferner ist es vorteilhaft, wenn der mindestens eine Parameter derart berücksichtigt wird, dass bei maximalem Drückerweg der Elektromotor sein maximales Drehmoment abgibt. Dies entspricht der Erwartung des Anwenders.

Vorzugsweise ist vorgesehen, dass der mindestens eine Parameter derart berücksichtigt wird, dass bei maximalem Drückerweg der Elektromotor seine maximale Drehzahl aufweist.

Ferner betrifft die Erfindung eine Elektrohandwerkzeugmaschine mit einer Pulsweitenmodulations-Ansteuerung wie vorstehend beschrieben.

Schließlich betrifft die Erfindung ein Verfahren zur Pulsweitenmodulations-Ansteuerung einer Elektrohandwerkzeugmaschine mit Akkustromversorgung, mit einem von einer Bedienperson betätigbaren Drücker, dessen Drückerweg von einer Pulsweitenmodulations-Schaltung in ein Pulsweitenmodulations-Tastverhältnis zur Ansteuerung eines Elektromotors zum Antreiben der Elektrohandwerkzeugmaschine umgesetzt wird, wobei von der Pulsweitenmodulations-Schaltung der Drückerweg unter Berücksichtigung mindestens eines weiteren Parameters in das Pulsweitenmodulations-Tastverhältnis umgesetzt wird. Erfindungsgemäß ist vorgesehen, dass der mindestens eine Parameter derart berücksichtig wird, dass ein linearer Anstieg des Drehmoments des Elektromotors mit dem Drückerweg im Falle des blockierten Elektromotors erfolgt und/oder dass ein linearer Anstieg der Drehzahl des Elektromotors mit dem Drückerweg im Falle des drehenden Elektromotors oberhalb seines Loslaufpunkts erfolgt.

## Kurze Beschreibung der Zeichnungen

Die Zeichnungen veranschaulichen die Erfindung, und zwar zeigt:

Figur 1             ein Diagramm,

Figur 2             ein Flussdiagramm,

Figuren 3 bis 7   verschiedene Diagramme,

Figur 8             ein Flussdiagramm und

Figur 9             verschiedene Diagramme.

## Ausführungsform(en) der Erfindung

Die Erfindung betrifft eine Pulsweitenmodulations-Ansteuerung einer Elektrowerkzeugmaschine, beispielsweise eines Akkuschraubers, mit einer Akkustromversorgung. Derartige Elektrohandwerkzeuge weisen zur Bedienung einen Drücker auf, der von einer Bedienperson mehr oder weniger weit entlang eines Drückerwegs eingedrückt werden kann. Je weiter der Drücker niedergedrückt wird, umso größer wird die Drehzahl eines Elektromotors des Elektrohandwerkzeugs, der eine Werkzeugaufnahme betätigt, sodass das Werkzeug mit entsprechend wachsender Geschwindigkeit betätigt wird. Im Falle eines Akkuschraubers handelt es sich um das Drehen einer Werkzeugaufnahme, die beispielsweise mit Werkzeugbits bestückt werden kann. Die Elektrohandwerkzeugmaschine wird von einer Akkustromversorgung betrieben, die über eine Pulsweitenmodulations-Schaltung den Elektromotor antreibt. In Abhängigkeit vom Drückerweg wird das Pulsweitenmodulations-Tastverhältnis (PWM-Tastverhältnis) vorgegeben, mit der der Elektromotor angesteuert wird.

Die Elektrohandwerkzeugmaschine weist mindestens einen Mikroprozessor auf, in dem ein vereinfachtes Modell der elektrischen Gleichungen der elektrischen/elektronischen Baugruppen abgelegt sind, um die Beziehung zwischen dem Drückerweg des Drückers und dem Tastverhältnis der Pulsweitenmodulation so einzustellen, dass bei voll durchgedrücktem Drücker das maximale Drehmoment von dem Elektromotor entfaltet wird und/oder bei voll durchgedrücktem Drücker die maximale Drehzahl des Elektromotors vorliegt, wobei beim blockierten Elektromotor ein linearer Anstieg des Drehmoments mit dem Drückerweg vorliegt und/oder ein linearer Anstieg der Drehzahl mit dem Drückerweg oberhalb des Loslaufpunkts im drehenden Fall des Elektromotors gegeben ist. Der blockierte Fall liegt vor, wenn das Werkzeug der Elektrohandwerkzeugmaschine sich nicht mehr bewegt, gleichwohl jedoch der Drücker betätigt ist, jedoch das eingestellte Drehmoment nicht ausreicht, das Gegenmoment des Werkzeugs zu überwinden. Der Loslaufpunkt ergibt sich, wenn im Zuge des Drückens des Drückers zunächst ein Drückerweg überwunden wird, bevor sich der Elektromotor in Bewegung setzt. Der Punkt, ab dem sich der Elektromotor zu drehen beginn, wird als Loslaufpunkt bezeichnet.

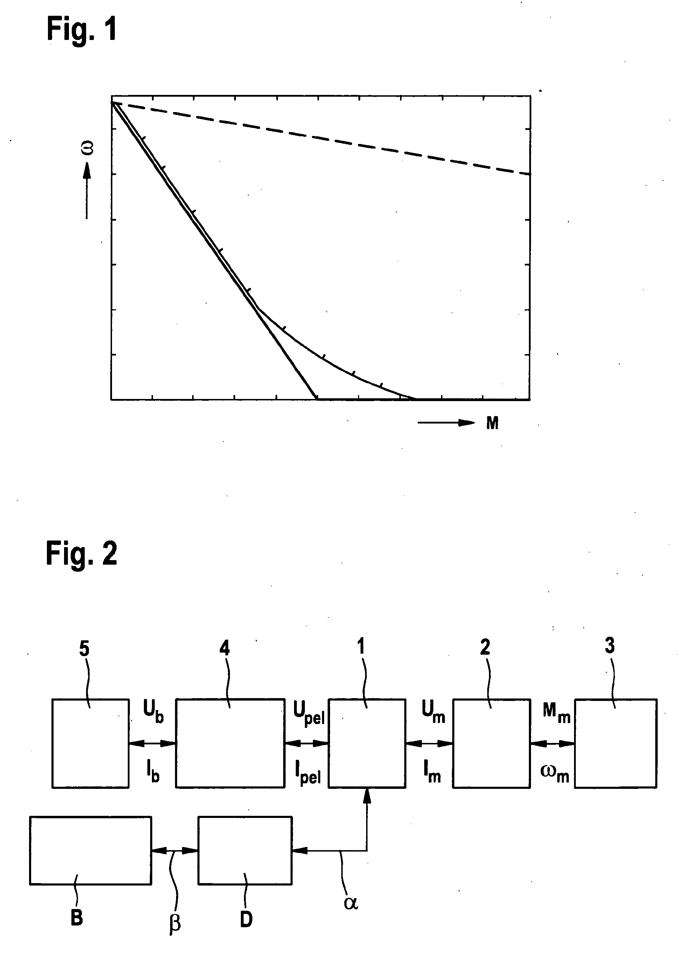

Aus dem Diagramm der Figur 1 ist mit gestrichelter Linie eine Motorkennlinie des Elektromotors mit niederohmiger Quelle dargestellt. Unter niederohmiger Quelle ist eine Akkustromversorgung zu verstehen, die einen relativ niedrigen Widerstand aufweist. Es ist erkennbar, dass die Drehzahl $\omega$ mit wachsendem Drehmoment M sinkt. Liegt eine hochohmige Quelle vor, also eine Akkustromversorgung die einen höheren Widerstand aufweist, so ergibt sich die mit durchgezogener Linie dargestellte Motorkennlinie. Hier sinkt die Drehzahl mit wachsendem Drehmoment wesentlich stärker und erreicht - im Knickpunkt der Kennlinie - den Wert Null, das heißt, ein steigendes Drehmoment führt logischerweise nicht zu einem Wiederanlaufen des Elektromotors. Die mit Seitenstrichen gekennzeichnete Kennlinie stellt eine Motorkennlinie mit erfindungsgemäßer Pulsweitenmodulations-Ansteuerung dar, wobei als Akkustromversorgung eine hochohmige Quelle verwendet wird. Es ist erkennbar, dass gegenüber der durchgezogenen Motorkennlinie ein höheres Blockiermoment vorliegt. Natürlich kann bei der Erfindung auch eine niederohmige Quelle verwendet werden. Dann wirken sich allerdings nur die Vorteile eines linearen Anstiegs aus.

Gemäß Figur 2 ergibt sich der grundlegende Aufbau der als Akkuschrauber ausgebildeten Elektrohandwerkzeugmaschine. Ein Bediener B kann über den Drückerweg $\beta$ einen Drücker D mehr oder weniger weit niederdrücken, wobei der Drücker D ein Potentiometer (Poti) betätigt, mit der Folge, dass als Ausgangswert ein Tastverhältnis einer Pulsweitenmodulation $\alpha$ ausgegeben wird, der einer Pulsweitenmodulations-Schaltung 1 zugeführt wird. Die eine Leistungselektronik enthaltene Pulsweitenmodulations-Schaltung 1 ist mit dem Elektromotor 2 verbunden, der eine Last 3 eventuell mit vorgeschaltetem Getriebe antreibt. Die Pulsweitenmodulations-Schaltung 1 steht mit einem Zwischenkreiskondensator 4 in Verbindung, der an eine Akkustromversorgung 5 angeschlossen ist. Hinsichtlich der elektrischen Beziehungen zwischen den einzelnen Elementen der Figur 2 gilt Folgendes: Die Akkustromversorgung 5 weist die Batteriespannung $U_b$ auf und es stellt sich der Batteriestrom (Mittelwert) $I_b$ ein. Es wird davon ausgegangen, dass die Pulsweitenmodulations-Schaltung 1 Transistoren aufweist, um die Pulsweitenmodulations-Signale und damit das Pulsweitenmodulations-Tastverhältnis zu erstellen. Insofern liegen - gemäß Figur 2 - ein gepulster Transistorstrom $I_{pel}$ und eine gepulste Transistorspannung $U_{pel}$ vor. Die vorstehend genannten und weitere elektrische und sonstigen Werte ergeben sich aus nachstehender Tabelle:

| | |
|---|---|
| $U_b$ [V]: | Batteriespannung |
| $I_b$ [A]: | Batteriestrom (Mittelwert) |
| $I_{pel}$ [A]: | Transistorstrom (gepulst) |
| $U_{pel}$ [V]: | Transistorspannung (gepulst) |
| $U_m$ [V]: | Motorspannung (Mittelwert) |
| $I_m$ [A]: | Motorstrom (Mittelwert; entspricht ungefähr dem Momentanwert wegen Induktivität, falls die PWM-Frequenz hoch genug ist) |
| $M_m$ [Nm]: | Motordrehmoment |
| $\omega_m$ | [rad/s]:Motordrehzahl |
| $\beta$ [-]: | normierter Drückerweg (0: gar nicht gedrückt, 1: voll gedrückt) |
| $\alpha$ [-]: | Tastverhältnis PWM (0: ausgeschaltet, 1: ständig eingeschaltet) |
| $U_0$ [V]: | Spannung unbelasteter Batterie |
| $R_b$ [$\Omega$]: | Innenwiderstand Batterie |

$c_m$       [Nm/A]:Motorkonstante

$R_M$ [$\Omega$]:      Motorwiderstand (mit Anteil ohmscher Widerstand von Elektronik)

Die grundlegenden Beziehungen zwischen den aus der Figur 1 hervorgehenden Komponenten lassen sich unter Vernachlässigung dynamischer Effekte (Induktivitäten, Trägheiten usw.) anhand folgender physikalischer Gleichungen beschreiben:

$$U_b = U_0 - R_b I_b$$

$$I_b = \alpha I_m$$

$$U_m = \alpha U_b$$

$$I_m = \frac{U_m - c_m \omega_m}{R_m}$$

$$M_m = c_m I_m$$

Anhand der letzten Gleichung sieht man, dass Motormoment und Motorstrom proportional sind. Die Kombination dieser Gleichungen führt zu folgender Gleichung:

$$R_b I_m \alpha^2 - U_0 \alpha + c_m \omega_m + R_m I_m = 0 \quad \text{(Gl. (1))}$$

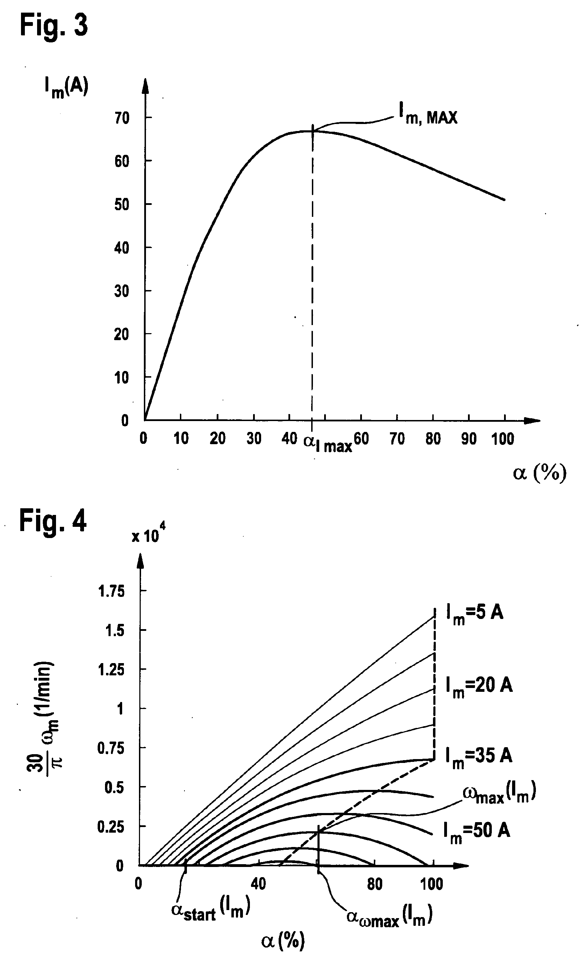

Die Figur 3 verdeutlicht die Beziehung zwischen dem Motorstrom $I_m$ und dem Pulsweitenmodulations-Tastverhältnis (PWM-Tastverhältnis) $\alpha$ Im Falle des blockierten Motors, also $\omega_m = 0$. Es gelten dabei die physikalischen Gleichungen:

$$\text{Blockiersystem} \quad I_m = \frac{\alpha U_0}{R_m + \alpha^2 R_b}$$

$$\text{Lage des Maximums } (\alpha_{Imax}; I_{m,MAX}):$$

$$\alpha_{Imax} = \sqrt{\frac{R_m}{R_b}}$$

$$I_{m,max} = \frac{U_0}{2\sqrt{R_m R_b}}$$

Aus der Figur 3 ist der Fall erkennbar, dass der Innenwiderstand des Elektromotors kleiner ist als der Innenwiderstand der Akkustromversorgung (Batterie), wobei der Elektromotor seinen maximalen Strom erhält beziehungsweise sein maximales Drehmoment liefert für ein Tastverhältnis $\alpha$ < 100 %. Bei der Umsetzung, für die gilt, dass der Drückerweg = Tastverhältnis ($\beta = \alpha$) ist, erhält man einen kleineren Stromwert beziehungsweise ein kleineres Drehmoment, wenn der Drückerweg β den Wert $\sqrt{R_m / R_b}$ überschreitet. Außerdem steigt der Blockierstrom im Bereich [0, $\alpha_{Imax}$] nicht linear mit dem Tastverhältnis $\alpha$ an. Die vorstehenden Ausführungen in Bezug auf die Figur 3 stellen den Stand der Technik für den blockierten Fall dar. Auch die nachstehenden Beziehungen zusammen mit der Figur 4 zeigen den Stand der Technik. Hier wird der Fall $\omega_m \neq 0$ gekennzeichnet, also der drehende Fall des Elektromotors. Die Figur 4 zeigt die Beziehung zwischen der Motordrehzahl $\omega_m$ und dem PWM-Tastverhältnis $\alpha$. Für einen bestimmten Motorstrom beziehungsweise für ein bestimmtes gefordertes Drehmoment dreht sich der Elektromotor unter der Bedingung $\alpha \geq \alpha_{start}$ ($I_m$). Bei hohen Motorströmen erreicht der Motor seine maximale Drehzahl für Tastverhältnisse $\alpha_{\omega max}(I_m)$ < 100% (gestrichelte Kurve in der Figur 4). Für Tastverhältnisse $\alpha > \alpha_{\omega max}(I_m)$ sinkt die Drehzahl (wie rechts von der gestrichelten Linie in Figur 4 ersichtlich). Hinsichtlich der Thematik der Figur 4 gelten folgende physikalische Gleichungen:

Nach Gleichung (1) gilt:

$$\omega_m = \frac{1}{c_m}\left[\alpha U_0 - \left(\alpha^2 R_b + R_m\right)I_m\right]$$

$$\alpha_{start}(I_m) = \left(\frac{U_0 - \sqrt{U^2_0 - 4R_b R_m I^2_m}}{2R_b I_n}\right)$$

$$\left.\begin{array}{l} \alpha_{\omega max}\left(I_m\right) = 1 \\[4mm] \omega_{max}\left(I_m\right) = \frac{1}{c_m}\left[U_0 - \left(R_b + R_m\right)I_m\right] \end{array}\right\} f\ddot{u}r \; I_m < \frac{U_0}{2R_b}$$

$$\left.\begin{array}{l} \alpha_{\omega max}\left(I_m\right) = \frac{U_0}{2R_b I_m} \\[4mm] \omega_{max}\left(I_m\right) = \frac{1}{c_m}\left[\frac{U_0^{\,2}}{4R_b I_m} - R_m I_m\right] \end{array}\right\} f\ddot{u}r \; I_m \geq \frac{U_0}{2R_b}$$

Es ist somit ersichtlich, dass bei der Umsetzung Drückerweg = Tastverhältnis ($\alpha=\beta$) der Anwender dann eine geringere Drehzahl erhält, wenn sein Wunsch, also der von ihm bewirkte Drückerweg β, den Wert $\alpha_{\omega max}(I_m)$ überschreitet. Außerdem steigt die Drehzahl des Elektromotors im Bereich [$\alpha_{start}(I_m)$, $\alpha_{\omega max}$] nicht linear mit dem Drückerweg β an.

Blockierter Fall:

Nachfolgend wird nunmehr auf die erfindungsgemäße Ausgestaltung für den blockierten Fall ($\omega_m$=0) und für den drehenden Fall ($\omega_m{\neq}$0) eingegangen:

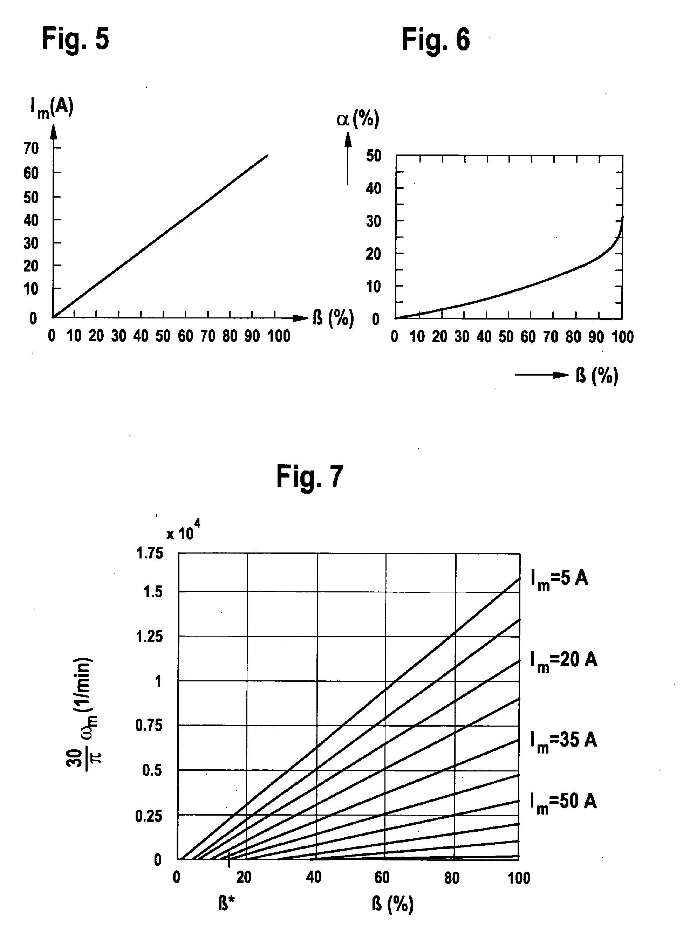

Erfindungsgemäß soll bei 100 % Drückerweg $\beta$ der maximale Motorstrom bei blockiertem Motor vorliegen (Figur 5). Außerdem soll die Beziehung zwischen dem blockierten Motorstrom und dem Drückerweg $\beta$ linear sein. Das Verhältnis zwischen Drückerweg $\beta$ und dem Tastverhältnis $\alpha$ soll hierzu folgende Bedingungen erfüllen:

$$\begin{cases} I_m = \beta I_{m,\max} = \beta \dfrac{U_0}{2\sqrt{R_m R_b}} \, (2) \\[2ex] R_b I_m \alpha^2 - U_0 \alpha + R_m I_m = 0 \, (3) \quad (\text{Gl.}(1) \text{ ohne Drehzahlanteil}) \end{cases}$$

und Gleichung (3) nach $\alpha$ aufgelöst lautet (nur die kleinere Lösung wird verwendet):

$$\alpha(I_m) = \frac{U_0 - \sqrt{U_0^2 - 4 R_b R_m I_m^2}}{2 R_b I_m}.$$

Anhand der Gleichung (2) folgt:

$$\alpha(\beta) = \frac{U_0 - \sqrt{U_0^2 - 4 R_b R_m I_{m,\max}^2 \beta^2}}{2 R_b I_{m,\max} \beta}$$

Die Figuren 5 und 6 zeigen für die erfindungsgemäße Ansteuerung im blockierten Fall die Abhängigkeit des Motorstroms vom Drückerweg und des Tastverhältnisses vom Drückerweg.

Lösung beim drehenden Fall ($\omega_m{\neq}$0) gemäß Figur 7:
100% Drückerweg $\beta$ des Benutzers soll der maximalen Motordrehzahl entsprechen. Außerdem soll die gewünschte Beziehung zwischen der Motordrehzahl und dem Drückerweg $\beta$ linear sein.

Das Verhältnis zwischen dem Drückerweg $\beta$ und dem Tastverhältnis $\alpha$ soll dafür folgende Bedingungen erfüllen:

$$\begin{cases} \omega_{m,Wunsch}(\beta) = \dfrac{\beta - \beta^*}{1 - \beta^*} \omega_{\max} \quad (4) \\[2ex] R_b I_m \alpha^2 - U_0 \alpha + c_m \omega_{m,Wunsch} + R_m I_m = 0 \, (5) \quad (\text{nach Gl.}(1)) \end{cases}$$

Dabei entspricht $\beta^*$ dem momentanen Drückerweg, bei dem der Elektromotor aufgrund des aktuell erforderlichen Drehmoments gerade losdrehen würde. $\omega_{\max}$ hängt folgendermaßen vom Strom ab:

$$\begin{cases} \beta^* = \dfrac{I_m}{I_{m,\max}} \\[3ex] \omega_{\max} = \begin{cases} \dfrac{1}{c_m}\left[U_0 - (R_b + R_m)I_m\right], & I_m < \dfrac{U_0}{2 R_b} \\[3ex] \dfrac{1}{c_m}\left[\dfrac{U_0^2}{4 R_b I_{m\,0}} - R_m I_m\right], & I_m \geq \dfrac{U_0}{2 R_b} \end{cases} \end{cases}$$

Wird die Gleichung (5) nach $\alpha$ aufgelöst und die kleinere Lösung verwendet, so ergibt sich:

$$\alpha\left(\omega_{m,Wunsch}\right) = \frac{U_0 - \sqrt{U_0^2 - 4R_b\left(R_m I_m + c_m \omega_{m,Wunsch}\right)I_m}}{2R_b I_m}\,(5)\,.$$

Zusammen mit Gleichung (4) liegt dann die gesuchte erfindungsgemäße Beziehung $\alpha(\beta)$ vor.

Zur Entscheidung, ob man bei der Erfindung im blockierten Fall oder im drehenden Fall ist, benötigt man eine Drehzahlinformation. Dazu bieten sich folgende Möglichkeiten an:

1. Drehzahlsensor.
2. Nutzung von Drehzahl-Informationen der Kommutierungslogik bei EC-Motoren.
3. Entscheidung nach dem Vorzeichen des berechneten $\beta$ - $\beta^*$ zum Umschalten zwischen drehenden und blockierten Fall.
4. Wie 3.) aber mit sanftem Übergang zwischen detektiertem "drehendem" und "blockiertem" Fall:

Im Fall der Möglichkeit 4. kann man folgende Steuerungsfunktion verwenden:

$$\alpha(\omega_m) = \frac{U_0 - \sqrt{U_0^2 - 4R_b(R_m I_m + c_m \omega_m)I_m}}{2R_b I_m}$$

unter Verwendung von

$$I_m = \left[1 - \frac{1}{2}\left(1 + tanh\left(k \cdot (\beta - \beta^*)\right)\right)\right] I_{m,max}\beta + \frac{1}{2}\left(1 + tanh\left(k \cdot (\beta - \beta^*)\right)\right) I_m$$

und

$$\omega_m = \frac{1}{2}\left(1 + tanh\left(k \cdot (\beta - \beta^*)\right)\right)\omega_{max}\frac{\beta - \beta^*}{1 - \beta^*}$$

mit einem Einstellfaktor k.

Der Vorteil der Erfindung ist im Vergleich der Figuren 4 und 7 deutlich erkennbar.

Nachstehend wird auf Varianten der Erfindung eingegangen:
Bisher werden für Widerstände usw. feste Werte verwendet. Insbesondere der ohmsche Motorwiderstand ist aber temperaturabhängig, was die Ergebnisse verfälscht.

Eine Verbesserung bei der erfindungsgemäßen Vorrichtung und dem erfindungsgemäßen Verfahren erfolgt durch Messung bzw. Schätzung der zeitveränderlichen Parameter. Z.B. kann bei bekannter Drehzahlinformation und Motorspannung (s.o) der Motorwiderstands bestimmt werden über

$$R_m = \frac{U_m - c_m \omega_m}{I_m}$$

Eine sehr einfache Variante, mit der zumindest die maximale Drehzahl $\omega_{max}$ ($I_m$) und das maximale Motormoment erreicht werden kann, ist, den Batteriestrom über das Tastverhältnis so zu beschränken wie bei einer Batterieschutzfunktion:

$$I_B \leq \frac{U_0}{2R_b}$$

Das muss vorzugsweise natürlich mit der eigentlichen Batterieschutzfunktion koordiniert werden.

Anstatt einer Steuerung wie oben beschrieben kann man die hergeleiteten Zusammenhänge auch mit einem Regler verbinden. Dabei verwendet man die Beziehungen (2) und (4) für Im und $\omega_{m,wunsch}$ als Sollwerte oder als Begrenzung und überlässt es einem Regler (z.B: PID), diese Werte einzustellen. Das kann insbesondere wegen der vernachlässigten Dynamik bei unseren Einfachbeziehungen und der evtl. ungenau bekannten Parameter günstig sein.

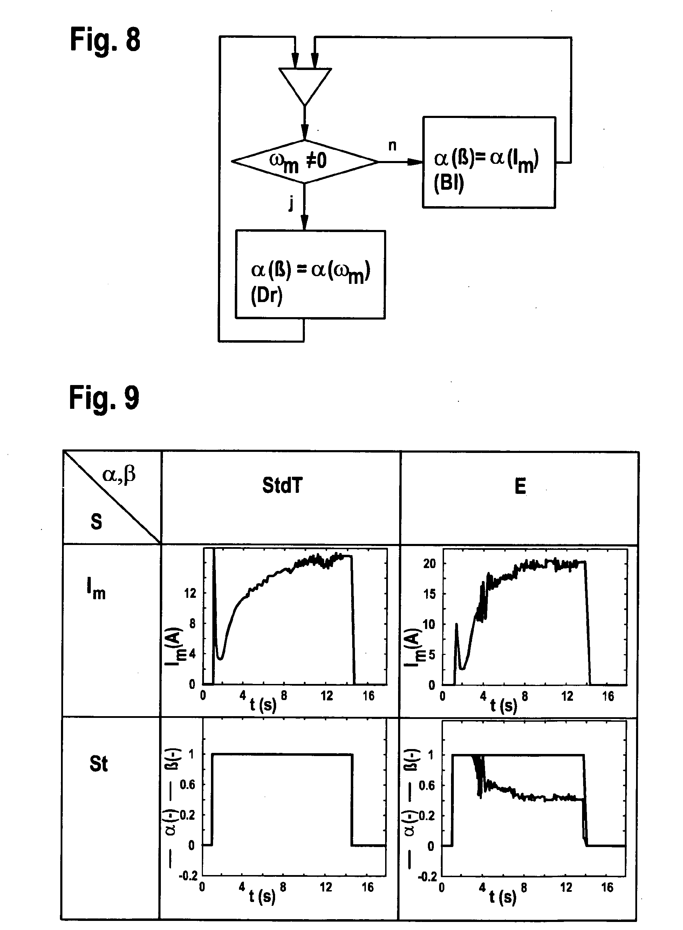

Im Betrieb sollen beide Fälle (Blockierung/Drehen) in einem gemeinsamen Steuerungsverfahren abgedeckt werden. Dieses ist im folgenden Zustandsautomaten gemäß Figur 8 zusammengefasst, wobei Blockierung mit Bl und Drehen mit Dr gekennzeichnet ist.

Die Figur 9 verdeutlicht bei einem experimentellen Versuchsaufbau auf der linken Seite den Stand der Technik StdT (linear) und auf der rechten Seite die Erfindung E. Es ist erkennbar, dass im erfindungsgemäßen Fall der maximale Motorstrom Im auf 20 A steigt, während er im Stand der Technik nur 17 A aufweist. Entsprechend verhalten sich die Drehmomente. St kennzeichnet hierbei die Steuerung.

**Patentansprüche**

1. Pulsweitenmodulations-Ansteuerung einer Elektrohandwerkzeugmaschine mit Akkustromversorgung, mit einem von einer Bedienperson betätigbaren Drücker, dessen Drückerweg von einer Pulsweitenmodulations-Schaltung in ein Pulsweitenmodulations-Tastverhältnis zur Ansteuerung eines Elektromotors zum Antreiben der Elektrohandwerkzeugmaschine umgesetzt wird, wobei die Pulsweitenmodulations-Schaltung den Drückerweg unter Berücksichtigung mindestens eines weiteren Parameters in das Pulsweitenmodulations-Tastverhältnis umsetzt, **dadurch gekennzeichnet, dass** der mindestens eine Parameter derart berücksichtig wird, dass ein linearer Anstieg des Drehmoments des Elektromotors mit dem Drückerweg im Falle des blockierten Elektromotors erfolgt und/oder dass ein linearer Anstieg der Drehzahl des Elektromotors mit dem Drückerweg im Falle des drehenden Elektromotors oberhalb seines Loslaufpunkts erfolgt.

2. Pulsweitenmodulations-Ansteuerung nach Anspruch 1, **dadurch gekennzeichnet, dass** der Parameter die aktuelle Motordrehzahl des Elektromotors ist.

3. Pulsweitenmodulations-Ansteuerung nach einem der vorhergehenden Ansprüche, **dadurch gekennzeichnet, dass** der Drücker ein Potentiometer aufweist, dessen Widerstandswert dem jeweiligen Drückerweg entspricht.

4. Pulsweitenmodulations-Ansteuerung nach einem der vorhergehenden Ansprüche, **dadurch gekennzeichnet, dass** die Pulsweitenmodulatians-Schaltung mindestens einen Mikroprozessor zur Berücksichtigung des mindestens einen Parameters aufweist.

5. Pulsweitenmodulations-Ansteuerung nach einem der vorhergehenden Ansprüche, **dadurch gekennzeichnet, dass** im Mikroprozessor ein vereinfachtes elektrisches Systemmodell der Elektrohandwerkzeugmaschine, insbesondere einschließlich der Akkustromversorgung, hinterlegt ist.

6. Pulsweitenmodulations-Ansteuerung nach einem der vorhergehenden Ansprüche, **dadurch gekennzeichnet, dass** der mindestens eine Parameter derart berücksichtigt wird, dass bei maximalem Drückerweg der Elektromotor sein maximales Drehmoment abgibt.

7. Pulsweitenmodulations-Ansteuerung nach einem der vorhergehenden Ansprüche, **dadurch gekennzeichnet, dass** der mindestens eine Parameter derart berücksichtigt wird, dass bei maximalem Drückerweg der Elektromotor seine maximale Drehzahl aufweist.

8. Elektrohandwerkzeugmaschine mit einer Pulsweitenmodulations-Ansteuerung nach einem oder mehreren der vorhergehenden Ansprüche.

9. Verfahren zur Pulsweitenmodulations-Ansteuerung einer Elektrohandwerkzeugmaschine mit Akkustromversorgung, mit einem von einer Bedienperson betätigbaren Drücker, dessen Drückerweg von einer Pulsweitenmodulations-Schaltung in ein Pulsweitenmodulations-Tastverhältnis zur Ansteuerung eines Elektromotors zum Antreiben der Elektrohandwerkzeugmaschine umgesetzt wird, wobei von der Pulsweitenmodulations-Schaltung der Drückerweg unter Berücksichtigung mindestens eines weiteren Parameters in das Pulsweitenmodulation-Tastverhältnis umgesetzt wird, **dadurch gekennzeichnet, dass** der mindestens eine Parameter derart berücksichtig wird, dass ein linearer Anstieg des Drehmoments des Elektromotors mit dem Drückerweg im Falle des blockierten Elektromotors erfolgt und/oder dass ein linearer Anstieg der Drehzahl des Elektromotors mit dem Drückerweg im Falle des drehenden Elektromotors oberhalb seines Loslaufpunkts erfolgt.

**Claims**

1. Pulse-width-modulation driving of a portable electric power tool having a rechargeable battery power supply, having a pushbutton which can be operated by an operator and of which the travel is converted by a pulse-width-modulation circuit into a pulse-width-modulation duty cycle for driving an electric motor for driving the portable electric power tool, with the pulse-width-modulation circuit converting the travel of the pushbutton into the pulse-width-modulation duty cycle taking into account at least one further parameter, **characterized in that** the at least one parameter is taken into account in such a way that the torque of the electric motor rises in a linear fashion with the travel of the pushbutton in the event of the electric motor being blocked, and/or **in that** the rotation speed of the electric motor rises in a linear fashion with the travel of the pushbutton in the event of the rotating electric motor being above its start point.

2. Pulse-width-modulation driving according to Claim 1, **characterized in that** the parameter is the current rotation speed of the electric motor.

3. Pulse-width-modulation driving according to either of the preceding claims, **characterized in that** the pushbutton has a potentiometer, the resistance value of this potentiometer corresponding to the respective travel of the pushbutton.

4. Pulse-width-modulation driving according to one of the preceding claims, **characterized in that** the pulse-width-modulation circuit has at least one microprocessor for taking into account the at least one parameter.

5. Pulse-width-modulation driving according to one of the preceding claims, **characterized in that** a simplified electrical system model of the portable electric power tool, in particular including the rechargeable battery power supply, is stored in the microprocessor.

6. Pulse-width-modulation driving according to one of the preceding claims, **characterized in that** the at least one parameter is taken into account in such a way that the electric motor outputs its maximum torque at the maximum travel of the pushbutton.

7. Pulse-width-modulation driving according to one of the preceding claims, **characterized in that** the at least one parameter is taken into account in such a way that the electric motor is at its maximum rotation speed at the maximum travel of the pushbutton.

8. Portable electric power tool exhibiting pulse-width-modulation driving according to one or more of the preceding claims.

9. Method for pulse-width-modulation driving of a portable electric power tool having a rechargeable battery power supply, having a pushbutton which can be operated by an operator and of which the travel is converted by a pulse-width-modulation circuit into a pulse-width-modulation duty cycle for driving an electric motor for driving the portable electric power tool, with the pulse-width-modulation circuit converting the travel of the pushbutton into the pulse-width-modulation duty cycle taking into account at least one further parameter, **characterized in that** the at least one parameter is taken into account in such a way that the torque of the electric motor rises in a linear fashion with the travel of the pushbutton in the event of the electric motor being blocked and/or **in that** the rotation speed of the electric motor rises in a linear fashion with the travel of the pushbutton in the event of the rotating electric motor being above its start point.

**EP 2 087 582 B1**

**Revendications**

1. Commande de la modulation de la largeur d'impulsions d'un outil manuel électrique alimenté en courant par des accumulateurs et présentant un poussoir actionné par l'opérateur et dont la course est convertie par un circuit de modulation de la largeur d'impulsions en un taux d'échantillonnage de la modulation de la largeur d'impulsions pour commander le moteur électrique qui entraîne l'outil manuel électrique,
le circuit de modulation de la largeur d'impulsions convertissant la course du poussoir en un taux d'échantillonnage de la modulation de la largeur d'impulsions en tenant compte d'au moins un autre paramètre,
**caractérisée en ce que**
le ou les autres paramètres sont pris en compte de manière à obtenir une augmentation linéaire du couple de rotation du moteur électrique avec la course du poussoir lorsque le moteur électrique est bloqué et/ou de manière à obtenir une augmentation linéaire de la vitesse de rotation du moteur électrique en fonction de la course du poussoir lorsque le moteur électrique tourne au-dessus de son point de rotation à vide.

2. Commande de la modulation de la largeur d'impulsions selon la revendication 1, **caractérisée en ce que** le paramètre est la vitesse de rotation effective du moteur électrique.

3. Commande de la modulation de la largeur d'impulsions selon l'une des revendications précédentes, **caractérisée en ce que** le poussoir présente un potentiomètre dont la valeur de la résistance correspond à la course du poussoir.

4. Commande de la modulation de la largeur d'impulsions selon l'une des revendications précédentes, **caractérisée en ce que** le circuit de modulation de la largeur d'impulsions présente au moins un microprocesseur qui tient compte du ou des paramètres.

5. Commande de la modulation de la largeur d'impulsions selon l'une des revendications précédentes, **caractérisée en ce qu'**un modèle électrique simplifié du système de l'outil manuel électrique est conservé dans le microprocesseur et présente notamment l'alimentation en courant par les accumulateurs.

6. Commande de la modulation de la largeur d'impulsions selon l'une des revendications précédentes, **caractérisée en ce que** le ou les paramètres sont pris en compte de manière à ce que le moteur électrique délivre son couple de rotation maximum lorsque la course du poussoir est à son maximum.

7. Commande de la modulation de la largeur d'impulsions selon l'une des revendications précédentes, **caractérisée en ce que** le ou les paramètres sont pris en compte de manière à ce que le moteur électrique présente sa vitesse de rotation maximale lorsque la course du poussoir est à son maximum.

8. Outil manuel électrique doté d'une commande de la modulation de la largeur d'impulsions selon une ou plusieurs des revendications précédentes.

9. Procédé de commande par modulation de la largeur d'impulsions d'un outil manuel électrique alimenté en courant par des accumulateurs et présentant un poussoir actionné par l'opérateur et dont la course est convertie par un circuit de modulation de la largeur d'impulsions en un taux d'échantillonnage de la modulation de la largeur d'impulsions pour commander le moteur électrique qui entraîne l'outil manuel électrique,
le circuit de modulation de la largeur d'impulsions convertissant la course du poussoir en un taux d'échantillonnage de la modulation de la largeur d'impulsions en tenant compte d'au moins un autre paramètre,
**caractérisé**- en ce que
le ou les autres paramètres sont pris en compte de manière à obtenir une augmentation linéaire du couple de rotation du moteur électrique avec la course du poussoir lorsque le moteur électrique est bloqué et/ou de manière à obtenir une augmentation linéaire de la vitesse de rotation du moteur électrique en fonction de la course du poussoir lorsque le moteur électrique tourne au-dessus de son point de rotation à vide.

# Fig. 1

# Fig. 2

## Fig. 3

## Fig. 4

# Fig. 5

# Fig. 6

# Fig. 7

# Fig. 8

# Fig. 9

**EP 2 087 582 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   US 20040179829 A1